# EUROPÄISCHE PATENTSCHRIFT

(11) **EP 3 456 584 B1**
(45) Veröffentlichungstag und Bekanntmachung des Hinweises auf die Patenterteilung: **18.11.2020**
(21) Anmeldenummer: 18193936.4
(22) Anmeldetag: 12.09.2018
(51) Int. Cl.: B60P 1/267, B60P 1/04

(54) **LASTENTRANSPORTFAHRZEUG UND VERFAHREN ZUM BETREIBEN DESSELBEN**
LOAD TRANSPORT VEHICLE AND METHOD FOR OPERATING SAME
VÉHICULE DE TRANSPORT DE CHARGES ET SON PROCÉDÉ DE FONCTIONNEMENT

(30) Priorität: 14.09.2017 DE 102017216303
(43) Veröffentlichungstag der Anmeldung: 20.03.2019
(73) Patentinhaber: Franz Xaver Meiller Fahrzeug- und Maschinenfabrik - GmbH & Co KG, 80997 München (DE)
(72) Erfinder: POPP, Klaus, 82346 Andechs (DE); KIBLER, Florian, 81243 München (DE); DREXLER, Hubert, 82347 Bernried (DE)
(74) Vertreter: Weickmann & Weickmann PartmbB

(56) Entgegenhaltungen:
- EP-A1- 2 364 877
- DE-A1-102006 019 938
- FR-A1- 2 883 534
- GB-A- 2 029 335

## Beschreibung

Die vorliegende Erfindung betrifft ein Lastentransportfahrzeug, umfassend einen Schüttgutbehälter zur Aufnahme von Schüttgut, einen mittels einer ersten Hydraulikvorrichtung hydraulisch betriebenen Kippaufbau, welcher dazu eingerichtet ist, den Schüttgutbehälter zum Abladen des Schüttguts um wenigstens eine erste Achse zu kippen, und eine Steuereinheit zum Ansteuern der ersten Hydraulikvorrichtung.

Derartige Lastentransportfahrzeuge werden üblicherweise für den Transport von schwerem Schüttgut, etwa Bauschutt, Sand, Kies oder ähnlichem verwendet. Sie können beispielsweise als Hinterkipper ausgeführt sein, in denen der Schüttgutbehälter um eine am Heck des Fahrzeugs vorgesehenen Achse nach oben gekippt wird, so dass der Abladevorgang in einen Bereich hinter dem Fahrzeug abläuft, oder als Mehrseitenkipper, in denen ein Kippen des Schüttgutbehälters in der eben beschriebenen Art nach hinten und/oder zu wenigstens einer der beiden Seiten des Fahrzeugs möglich ist. Weiterhin können derartige Fahrzeuge auch als Anhänger ausgebildet sein, d.h. selbst nicht über einen Antrieb verfügen, sondern dazu eingerichtet sein, von einer Zugmaschine gezogen zu werden.

In bekannten gattungsgemäßen Lastentransportfahrzeugen wird zum Auslösen der Kippbewegung des Schüttgutbehälters ein an sich bekannter Hydraulikzylinder mit Öl beaufschlagt und so lange ausgefahren, wie die Hydraulikvorrichtung betrieben wird. Die Steuerung dieser Kippbewegung wird hierbei von einem Bediener vorgenommen, der folglich sowohl das Lastentransportfahrzeug als auch den Schüttgutbehälter und wenigstens den Bereich der Umgebung des Fahrzeugs, in den das Schüttgut abgeladen werden soll, im Auge behalten muss, um den Abladevorgang sicher und effizient sowie mit geeigneter Präzision durchführen zu können. Andererseits sind auch Systeme bekannt, in denen auf eine einzelne Betätigung hin ein Abladevorgang in einer derartigen Weise automatisch durchgeführt wird, dass eine vorbestimmte Kippbewegung des Schüttgutbehälters durchlaufen wird, auf die jedoch nicht regelnd eingegriffen werden kann.

In den beiden bekannten Beispielen erhält die Steuereinheit keine Rückmeldung über den momentanen Zustand der Hydraulikvorrichtung oder anderer Komponenten des Lastentransportfahrzeugs. Insbesondere in komplizierter aufgebauten Hydraulikvorrichtungen, die nicht lediglich einen einzelnen Hydraulikzylinder umfassen, sondern eine Mehrzahl von koordiniert zu betreibenden Hydraulikzylindern, kann daher ein Abladevorgang nur unter Sichtkontrolle des Bedieners durchgeführt werden. Voneinander abhängige Funktionen von solchen Hydraulikvorrichtungen sind in einer vorgeschriebenen Reihenfolge vom Bediener zu steuern. Sollten ferner Endstellungen von Hydraulikkomponenten vorgesehen sein, so müssen diese über separate Sensoren abgefragt werden.

Ferner sind aus der DE 10 2006 019 938 A1, die den nächstliegenden Stand der Technik darstellt und den Oberbegriff des Anspruchs 1 offenbart, und der EP 2 364 877 A1 Lastentransportfahrzeuge bekannt, die eine Hydraulikvorrichtung, eine Steuereinheit und wenigstens eine Sensoreinheit umfassen, wobei die Steuereinheit dazu eingerichtet ist, die Hydraulikvorrichtung anhand von durch die Sensoreinheit gelieferten Daten anzusteuern. Des Weiteren sei aus Gründen der Vollständigkeit auf die GB 2029335 A und die FR 2883534 A1 verwiesen, die ebenfalls mit Sensoreinheiten ausgerüstete Lastentransportfahrzeuge zeigen.

Angesichts der genannten Nachteile von bekannten gattungsgemäßen Lastentransportfahrzeugen ist es die Aufgabe der vorliegenden Erfindung, ein derartiges Fahrzeug bereitzustellen, das einen erhöhten Automatisierungsgrad und eine verbesserte Integration der an Kippvorgängen beteiligten Komponenten erlaubt und somit zu einer vereinfachten und effizienteren Bedienung sowie zu effizienteren Arbeitsabläufen führt.

Zur Lösung dieser Aufgabe umfasst das erfindungsgemäße Lastentransportfahrzeug ferner wenigstens eine Sensoreinheit, welche dazu eingerichtet ist, Daten an die Steuereinheit zu liefern, welche wenigstens einen momentanen Betriebsparameter des Lastentransportfahrzeugs repräsentieren, wobei die Steuereinheit ferner dazu eingerichtet ist, die Hydraulikvorrichtung gemäß wenigstens einem vorbestimmten Ablaufprogramm anzusteuern und das wenigstens eine vorbestimmte Ablaufprogramm anhand der von der wenigstens einen Sensoreinheit erfassten Daten während des Durchführens des Ablaufprogramms anzupassen.

Durch das erfindungsgemäße Vorsehen wenigstens einer Sensoreinheit und eines Anpassens eines vorbestimmten Ablaufprogramms in Echtzeit während des Durchführens des Ablaufprogramms kann in einfacher Weise eine Regelschleife geschaffen werden, mit der übliche Betriebsvorgänge eines hydraulisch betriebenen Kippaufbaus vereinfacht und optimiert werden können. Im einfachsten Fall lediglich eines vorgesehenen Hydraulikzylinders kann beispielsweise daran gedacht werden, dass dieser bis zu einer vorbestimmten optimalen Hubposition ausgefahren wird, die einem Kippwinkel des Schüttgutbehälters entspricht, in welchem ein optimaler Abladevorgang des Schüttguts erwartet wird, ohne dass dieses zu nah am Fahrzeug angesammelt würde.

Indem nun von einem Sensor der entsprechende Hubweg des Hydraulikzylinders und/oder der Kippwinkel des Kippaufbaus erfasst wird, kann sichergestellt werden, dass dieser Winkel präzise eingehalten wird und es kann beispielsweise bei Erreichen des vorgesehenen Winkels ein Rüttelvorgang durchgeführt werden, durch den das Schüttgut aus dem gekippten Schüttgutbehälter herausgerüttelt wird. Indem hierbei der Kippwinkel des Schüttgutbehälters ständig überwacht wird, kann ein Ablauf des eben beschriebenen Vorgangs mit seinen vorgesehenen optimierten Parametern zu jedem Zeitpunkt gewährleistet werden.

In einer Weiterbildung der Erfindung kann der Schüttgutbehälter wenigstens eine schwenkbare Wand aufweisen, welche dazu eingerichtet ist, von einer ihr zugeordneten zweiten Hydraulikvorrichtung um eine zweite Achse geschwenkt zu werden. Indem eine derartige schwenkbare Wand an einem Schüttgutbehälter vorgesehen wird, kann beispielsweise ein Abladevorgang realisiert werden, bei welchem das Schüttgut über die Innenseite der schwenkbaren Wand möglichst weit vom Fahrzeug entfernt abgekippt wird. Hierzu wird die schwenkbare Wand in eine horizontale Position geschwenkt, wodurch eine maximale Auskragung von dem Lastentransportfahrzeug weg erreicht wird. Diese maximale Auskragung wird dann bei einem anschließenden Kippen des Schüttgutbehälters in Richtung der Wand beibehalten, indem eine entgegengesetzte Schwenkbewegung der Wand durchgeführt wird, so dass der Winkel zwischen dem Schüttgutbehälter und der Wand wieder verkleinert wird, die Auskragung der schwenkbaren Wand von Fahrzeug weg allerdings maximal bleibt. In ähnlicher Weise wie oben beschrieben kann anschließend ein Rüttelvorgang des Schüttbehälters oder/und der schwenkbaren Wand durchgeführt werden.

Auch ein derartiger Ablauf profitiert von der oben beschriebenen Regelschleife, die durch das Vorsehen der wenigstens einen Sensoreinheit und ihr Zusammenwirken mit der Steuereinheit und damit der ersten und zweiten Hydraulikvorrichtung erzielt wird. Erfindungsgemäß ist hierbei die Sensoreinheit oder wenigstens eine der mehreren Sensoreinheiten der ersten und/oder zweiten Hydraulikvorrichtung zugeordnet sein, um jeweils einen Betriebsparameter der entsprechenden Vorrichtung zu überwachen.

Erfindungsgemäß ist die eine Sensoreinheit oder wenigstens eine der mehreren Sensoreinheiten einem Hydraulikzylinder der ersten und/oder zweiten Hydraulikvorrichtung zugeordnet und dazu eingerichtet sein, den momentanen Hubweg des Hydraulikzylinders zu erfassen, beispielsweise mittels elektro-mechanischer Mittel oder Ultraschall. Indem auf diese Weise der jeweilige momentane Hubweg von der einen Sensoreinheit oder wenigstens einer der mehreren Sensoreinheiten erfasst und der Steuereinheit zur Verfügung gestellt wird, kann diese ein vorbestimmtes Ablaufprogramm, wie beispielsweise das oben beschriebene Abladen des Schüttguts in maximaler Entfernung vom Fahrzeug, in geregelter Weise optimal durchführen.

Alternativ sind jedoch auch andere Sensoreinheiten oder Kombinationen davon denkbar, um die genannten vorteilhaften Ergebnisse zu erzielen. Beispielsweise könnte an einen in der schwenkbaren Wand vorgesehenen Lagesensor gedacht werden, der direkt die relative Orientierung der schwenkbaren Wand zum Fahrzeug oder auch zum Untergrund erfasst.
Ferner könnte auch wenigstens ein Winkelaufnehmer vorgesehen werden, der dann dementsprechend den Winkel zwischen dem Schüttgutbehälter und dem Fahrzeugkörper und/oder den Winkel zwischen der schwenkbaren Wand und dem Schüttgutbehälter erfasst und an die Steuereinheit zum Anpassen des Ablaufprogramms liefert.

Zusätzlich oder alternativ kann die Sensoreinheit oder wenigstens eine der mehreren Sensoreinheiten dazu eingerichtet sein, eine Neigung des Lastentransportfahrzeugs aus der Horizontalen zu erfassen. Eine derartige Sensoreinheit ist insbesondere in unebenem Gelände von Vorteil, in dem das Lastentransportfahrzeug auf einem abschüssigen Untergrund aufsteht. Im oben genannten Beispiel einer erwünschten maximalen Auskragung einer schwenkbaren Wand des Schüttgutbehälters gegenüber dem Fahrzeug selbst kann somit durch das zusätzliche Vorsehen eines Neigungssensors am Lastentransportfahrzeug die Wirkung des abschüssigen Untergrunds ausgeglichen werden, so dass in jedem Fall gewährleistet werden kann, dass die schwenkbare Seitenwand auch in diesem Falle stets streng in der Horizontalen orientiert ist.

Um die Bedienung des erfindungsgemäßen Lastentransportfahrzeugs für einen Benutzer zu vereinfachen, kann es ferner eine Bedienvorrichtung umfassen, welche betriebsmäßig mit der Steuereinheit gekoppelt und dazu eingerichtet ist, von dem Benutzer zur Auswahl des vorbestimmten Ablaufprogramms oder eines der mehreren vorbestimmten Ablaufprogramme bedient zu werden. Hierdurch zeigt sich ein weiterer erheblicher Vorteil der vorliegenden Erfindung, nämlich dass unter Umständen auf die aufwändigen und komplex zu bedienenden Bedienelemente für mehrere Komponenten eines Hydrauliksystems verzichtet werden kann und der Benutzer lediglich auf das wenigstens eine vorbestimmte Ablaufprogramm zurückgreifen muss, das er beispielsweise mittels Druckknöpfen oder auch eines Touchscreens auswählen und aufrufen kann. Somit erhöht die vorliegende Erfindung nicht nur die Effizienz und Präzision von gattungsgemäßen Lastentransportfahrzeugen, sondern sie kann durch ihre vereinfachte Bedienung auch zum Vermeiden von Bedienfehlern beitragen.

Weiterhin betrifft die vorliegende Erfindung ein Verfahren zum Betreiben eines Lastentransportfahrzeugs, umfassend einen Schüttgutbehälter zur Aufnahme von Schüttgut, einen mittels einer ersten Hydraulikvorrichtung hydraulisch betriebenen Kippaufbau, welcher dazu eingerichtet ist, den Schüttgutbehälter zum Abladen des Schüttguts um wenigstens eine Achse zu kippen, und eine Steuereinheit zum Ansteuern der Hydraulikvorrichtung, wobei das erfindungsgemäße Verfahren die folgenden Schritte umfasst:
ein Ablegen von wenigstens einem vordefinierten Ablaufprogramm in einem der Steuereinheit zugeordneten Speicher,
ein Erfassen wenigstens eines momentanen Betriebsparameters des Lastentransportfahrzeugs mittels wenigstens einer Sensoreinheit, welche betriebsmäßig mit der Steuereinheit gekoppelt ist,
ein Betreiben der ersten Hydraulikvorrichtung gemäß dem vordefinierten Ablaufprogramm oder einem der mehreren vordefinierten Ablaufprogramme, und
ein Anpassen des Ablaufprogramms anhand der von der wenigstens einen Sensoreinheit erfassten Daten während des Durchführens des Ablaufprogramms.

Wie oben bereits angesprochen, kann hierbei das Erfassen des wenigstens einen momentanen Betriebsparameters des Lastentransportfahrzeugs prinzipiell jeden Betriebsparameter betreffen, der für wenigstens eines der vordefinierten Ablaufprogramme relevant sein kann. In jedem Fall ist dies erfindungsgemäß ein momentaner Hubweg eines Hydraulikzylinders der ersten Hydraulikvorrichtung oder ein momentaner Hubweg eines Hydraulikzylinders einer einer schwenkbaren Wand des Schüttgutbehälters zugeordneten zweiten Hydraulikvorrichtung und ggf. ferner eine Neigung des Lastentransportfahrzeugs aus der Horizontalen.

Ferner kann das erfindungsgemäße Verfahren ein Überwachen einer vorbestimmten Endstellung einer während des Ablaufprogramms betätigten Komponente sowie ggf. eine Anpassung des Ablaufprogramms auf Grundlage dieser Überwachung umfassen. Dieses Überwachen von Endstellungen durch die erfindungsgemäß vorgesehene wenigstens eine Sensoreinheit trägt zum sicheren Betreiben von erfindungsgemäßen Lastentransportfahrzeugen bei, beispielsweise indem sichergestellt werden kann, dass sich der Schüttgutbehälter am Ende eines Abladevorgangs wieder in der vorgeschriebenen fahrbereiten Position befindet, da anderenfalls die zulässige Gesamthöhe des Fahrzeugs überschritten sein könnte, was insbesondere bei einer Kollision mit einer Brücke oder ähnlichem zu schwersten Unfällen führen kann. In einem anderen Ausführungsbeispiel kann alternativ oder zusätzlich überwacht werden, dass eine schwenkbare Wand des Schüttgutbehälters wieder in den geschlossenen Zustand überführt wird, so dass nach einem erneuten Beladen des Lastentransportfahrzeugs nicht unbeabsichtigt Ladung verlorengehen kann oder die schwenkbare Wand gar seitlich gegen ein Rad schlägt, falls sie überhaupt nicht wieder aufgerichtet worden ist, nachdem der Abladevorgang abgeschlossen und die Fahrt wieder aufgenommen worden ist.

Des Weiteren kann auch noch daran gedacht werden, im Zusammenhang mit dem Durchführen des Ablaufprogramms weitere Komponenten des Fahrzeugs zu überwachen, die an dem Ablaufprogramm selbst nicht oder nur indirekt beteiligt sind. Hierbei könnte daran gedacht werden, dass nach einem Beendigen des Ablaufprogramms, wenn das Fahrzeug wieder in einen Fahrbetrieb übergehen kann, von der Steuereinheit überprüft wird, ob die weiteren Komponenten ebenfalls in einem Zustand sind, der ein sicheres Fahren des Fahrzeugs ermöglicht. Beispielhaft sei hier ein Unterfahrschutz des Fahrzeugs angesprochen, der zwar nicht direkt an dem Abladevorgang beteiligt ist, allerdings an dem Fahrzeugkörper verfahren werden könnte, um den Abladevorgang nicht zu behindern. Dieser Unterfahrschutz könnte dann nach Abschluss des Ablaufprogramms mittels einer geeigneten Sensoreinheit dahingehend überprüft werden, ob er sich wieder in seiner vorgesehenen Stellung für einen Fahrbetrieb des Fahrzeugs befindet.

Zuletzt kann das erfindungsgemäße Verfahren ferner ein Auswählen des Ablaufprogramms oder eines der mehreren Ablaufprogramme durch einen Benutzer mittels einer Bedienvorrichtung umfassen, welche betriebsmäßig mit der Steuereinheit gekoppelt ist.

Weitere Merkmale und Vorteile der vorliegenden Erfindung werden aus der nachfolgenden Beschreibung einer Ausführungsform anhand der beiliegenden Figuren deutlich, die im Einzelnen zeigen:
- Figur 1: eine schematische Ansicht eines erfindungsgemäßen Lastentransportfahrzeugs; und
- Figur 2: ein schematisches Schaltbild von in dem Lastentransportfahrzeug aus Figur 1 vorgesehenen hydraulischen und elektronischen Komponenten.

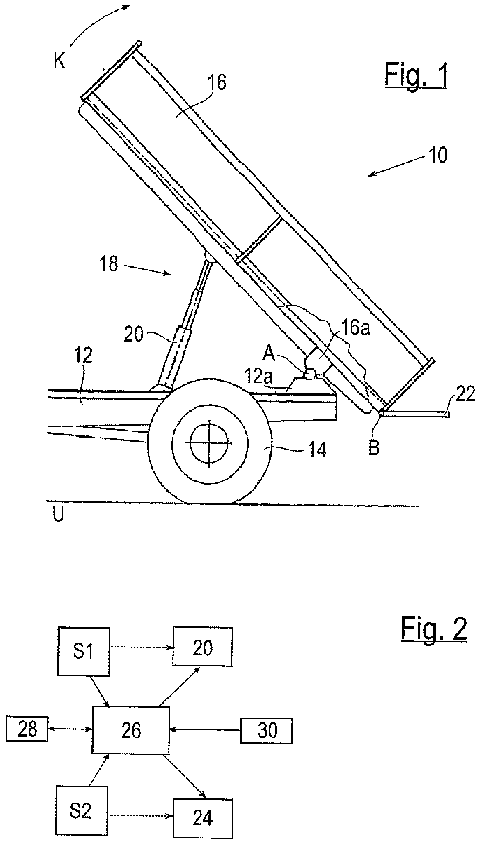

In Figur 1 ist der hintere Teil eines erfindungsgemäßen Lastentransportfahrzeugs gezeigt, das in einer Bauweise als Heckkipper ausgebildet und ganz allgemein mit dem Bezugszeichen 10 bezeichnet ist. Das Lastentransportfahrzeug 10 umfasst an sich bekannte Elemente wie einen Fahrzeugkörper 12 und Räder 14, mit denen es auf einem Untergrund U aufsteht. Ferner umfasst es einen Schüttgutbehälter 16, der zur Aufnahme von Schüttgut vorgesehen ist, das beispielsweise über ein Förderband oder von einem Bagger von oben her in den Schüttgutbehälter 16 einfüllbar ist.

Der Schüttgutbehälter 16 ist um eine im Heckbereich des Lastentransportfahrzeugs 10 vorgesehene Kippachse A kippbar mit dem Fahrzeugkörper 12 verbunden, wobei die jeweils dem Fahrzeugkörper 12 und dem Schüttgutbehälter 16 zugeordneten Kippachsen-Elemente 12a und 16a, mittels derer der Schüttgutbehälter 16 an dem Fahrzeugkörper 12 gehalten ist, zusammen mit einer im Folgenden beschriebenen Hydraulikvorrichtung einen Kippaufbau 18 bilden.

Die bereits angesprochene Hydraulikvorrichtung umfasst neben bekannten, aber in der Figur 1 nicht gezeigten Komponenten, wie einer Hydraulikpumpe und Hydraulikleitungen, ferner den ausfahrbaren Hydraulikzylinder 20, der ebenfalls sowohl mit dem Fahrzeugkörper 12 als auch mit dem Schüttgutbehälter 16 verbunden ist und den Schüttgutbehälter 16 bei einem Ausfahren um die Achse A in Richtung des Pfeils K nach oben und hinten kippt. In dem in Figur 1 gezeigten Zustand eines nach oben und hinten gekippten Schüttgutbehälters 16 wird das Schüttgut der Schwerkraft folgend aus dem Schüttgutbehälter heraus rieseln oder rollen, so dass diese Darstellung einem Abladevorgang für das Schüttgut entspricht.

Um den eben beschriebenen Abladevorgang derart durchführen zu können, dass das Schüttgut möglichst weit vom Fahrzeug 10 entfernt abgeladen wird, ist dem Schüttgutbehälter 16 ferner eine schwenkbare Rückwand 22 zugeordnet, die mittels einer nicht gezeigten zweiten Hydraulikvorrichtung um eine Schwenkachse B schwenkbar angelenkt ist. Hierbei ist in der Darstellung aus Figur 1 die schwenkbare Wand 22 parallel zum Untergrund U, also horizontal, orientiert, um so eine maximale Auskragung gegenüber dem Fahrzeug 10 darzustellen.

Um nun während des durch den Pfeil K angedeuteten Kippvorgangs des Schüttgutbehälters 16 stets sicherstellen zu können, dass sich die schwenkbare Wand 22 zu jedem Zeitpunkt in der Horizontalen, also maximal gegenüber dem Fahrzeug 10 ausgekragt, befindet, umfasst das Lastentransportfahrzeug 10 ferner die in Figur 2 dargestellten Komponenten. Wie bereits angesprochen, wird die Kippbewegung des Schüttgutbehälters 16 durch den bereits in Figur 1 gezeigten Hydraulikzylinder 20 hervorgerufen, während die Schwenkbewegung der schwenkbaren Wand 22 durch einen weiteren Hydraulikzylinder 24 hervorgerufen wird, der in Figur 1 aus Gründen der Übersichtlichkeit noch nicht dargestellt ist. Zum Ansteuern der beiden Hydraulikzylinder 20 und 24 ist ferner eine Steuereinheit 26 vorgesehen, die einerseits elektronische Komponenten, wie einen Speicher 28 zum Speichern von vorbestimmten Ablaufprogrammen und einem Betriebssystem, umfasst und andererseits zum Ansteuern der Hydraulikzylinder 20 und 24 notwendige Hydraulikkomponenten, wie beispielsweise Proportionalventile und Ähnliches.

Weiterhin sind den beiden Hydraulikzylindern 20 und 24 jeweilige Sensoreinheiten S1 und S2 zugeordnet, die in an sich bekannter Weise, beispielsweise elektro-mechanisch oder mittels Ultraschall, den momentanen Hubweg des Kolbens des jeweiligen Zylinders und damit den Ausfahrzustand des entsprechenden Zylinders erfassen. Diese beiden Sensoren S1 und S2 geben ihre Erfassungsergebnisse jeweils an die Steuereinheit 26 weiter. Wird nun von einem Benutzer des Lastentransportfahrzeugs über eine Bedienvorrichtung 30 eine Anweisung an die Steuereinheit 26 eingegeben, beispielsweise um den im Zusammenhang mit Figur 1 beschriebenen Abladevorgang auszulösen, so lädt die Steuereinheit 26 das zugehörige Ablaufprogramm aus dem Speicher 28 und setzt die Hydraulikzylinder 20 und 24 entsprechend in Gang.

Indem nun während des Durchführens des Ablaufprogramms durch die Sensoren S1 und S2 der jeweilige momentane Hubweg der beiden Hydraulikzylinder 20 und 24 überwacht wird, kann die Steuereinheit 26 anhand der von den Sensoreinheiten S1 und S2 gelieferten Daten das Ablaufprogramm in Echtzeit derart anpassen, dass das gewünschte Ablaufprogramm mit hoher Präzision durchgeführt wird, beispielsweise in Zusammenhang mit Figur 1 die schwenkbare Wand 22 stets in der Horizontalen gehalten wird, um ein Abladen des Schüttguts in maximaler Entfernung von dem Lastentransportfahrzeug 10 zu jedem Zeitpunkt sicherzustellen.

## Patentansprüche

1. Lastentransportfahrzeug, umfassend:
- einen Schüttgutbehälter (16) zur Aufnahme von Schüttgut;
- einen mittels einer ersten Hydraulikvorrichtung (20) hydraulisch betriebenen Kippaufbau (18), welcher dazu eingerichtet ist, den Schüttgutbehälter (16) zum Abladen des Schüttguts um wenigstens eine Achse (A) zu kippen; und
- eine Steuereinheit (26) zum Ansteuern der ersten Hydraulikvorrichtung (20);
wobei es ferner wenigstens eine Sensoreinheit (S1, S2) umfasst, welche dazu eingerichtet ist, Daten an die Steuereinheit (26) zu liefern, welche wenigstens einen momentanen Betriebsparameter des Lastentransportfahrzeugs repräsentieren, wobei die Steuereinheit (26) ferner dazu eingerichtet ist, die erste Hydraulikvorrichtung (20) gemäß wenigstens einem vorbestimmten Ablaufprogramm anzusteuern und das wenigstens eine vorbestimmte Ablaufprogramm anhand der von der wenigstens einen Sensoreinheit (S1, S2) erfassten Daten während des Durchführens des Ablaufprogramms anzupassen,
wobei die eine Sensoreinheit (S1, S2) oder wenigstens eine der mehreren Sensoreinheiten (S1, S2) der ersten und/oder zweiten Hydraulikvorrichtung (20, 24) zugeordnet ist, **dadurch gekennzeichnet, dass** die eine Sensoreinheit (S1, S2) oder wenigstens eine der mehreren Sensoreinheiten (S1, S2) einem Hydraulikzylinder der ersten bzw. zweiten Hydraulikvorrichtung (20, 24) zugeordnet und dazu eingerichtet ist, den momentanen Hubweg des Hydraulikzylinders zu erfassen, beispielsweise mittels elektro-mechanischer Mittel oder Ultraschall.

2. Lastentransportfahrzeug nach Anspruch 1,
**dadurch gekennzeichnet, dass** der Schüttgutbehälter (16) wenigstens eine schwenkbare Wand (22) aufweist, welche dazu eingerichtet ist, von einer ihr zugeordneten zweiten Hydraulikvorrichtung (24) um eine zweite Achse (B) geschwenkt zu werden.

3. Lastentransportfahrzeug nach einem der vorhergehenden Ansprüche,
**dadurch gekennzeichnet, dass** wenigstens eine der mehreren Sensoreinheiten (S1, S2) dazu eingerichtet ist, eine Neigung des Lastentransportfahrzeugs aus der Horizontalen zu erfassen.

4. Lastentransportfahrzeug nach einem der vorhergehenden Ansprüche,
**dadurch gekennzeichnet, dass** es ferner eine Bedienvorrichtung (309 umfasst, welche betriebsmäßig mit der Steuereinheit (26) gekoppelt und dazu eingerichtet ist, von einem Benutzer zur Auswahl des einen vorbestimmten Ablaufprogramms oder eines der mehreren vorbestimmten Ablaufprogramme bedient zu werden.

5. Verfahren zum Betreiben eines Lastentransportfahrzeugs (10), umfassend einen Schüttgutbehälter (16) zur Aufnahme von Schüttgut, einen mittels einer ersten Hydraulikvorrichtung (20) hydraulisch betriebenen Kippaufbau (18), welcher dazu eingerichtet ist, den Schüttgutbehälter (16) zum Abladen des Schüttguts um wenigstens eine Achse (A) zu kippen, und eine Steuereinheit (26) zum Ansteuern der ersten Hydraulikvorrichtung (20);
wobei es die folgenden Schritte umfasst:
- ein Ablegen von wenigstens einem vordefinierten Ablaufprogramm in einem der Steuereinheit (26) zugeordneten Speicher (28);
- ein Erfassen wenigstens momentanen Betriebsparameter des Lastentransportfahrzeugs (10) mittels wenigstens einer Sensoreinheit (S1, S2), welche betriebsmäßig mit der Steuereinheit (26) gekoppelt ist;
- ein Betreiben der ersten Hydraulikvorrichtung (20) gemäß dem vordefinierten Ablaufprogramm oder einem der mehreren vordefinierten Ablaufprogramme;
ein Anpassen des Ablaufprogramms anhand der von der Sensoreinheit (S1, S2) erfassten Daten während des Durchführens des Ablaufprogramms; **dadurch gekennzeichnet, dass** das Erfassen des wenigstens einen momentanen Betriebsparameters des Lastentransportfahrzeugs (10) ein Erfassen von wenigstens einem der folgenden umfasst:
- ein momentaner Hubweg eines Hydraulikzylinders der ersten Hydraulikvorrichtung (20); und
- ein momentaner Hubweg eines Hydraulikzylinders einer einer schwenkbaren Wand (22) des Schüttgutbehälters (16) zugeordneten zweiten Hydraulikvorrichtung (24).

6. Verfahren nach Anspruch 5,
**dadurch gekennzeichnet, dass** das Erfassen des wenigstens einen momentanen Betriebsparameters des Lastentransportfahrzeugs ein Erfassen einer Neigung des Lastentransportfahrzeugs (10) aus der Horizontalen umfasst.

7. Verfahren nach Anspruch 5 oder 6,
**dadurch gekennzeichnet, dass** es ferner ein Überwachen einer vorbestimmten Endstellung einer während des Ablaufprogramms betätigten Komponente sowie gegebenenfalls einer Anpassung des Ablaufprogramms auf Grundlage dieser Überwachung umfasst.

8. Verfahren nach einem der Ansprüche 5 bis 7,
**dadurch gekennzeichnet, dass** es ferner ein Auswählen des vorbestimmten Ablaufprogramms oder eines der mehreren vorbestimmten Ablaufprogramme durch einen Benutzer mittels einer Bedienvorrichtung (30) umfasst, welche betriebsmäßig mit der Steuereinheit (26) gekoppelt ist.

## Claims

1. Load transport vehicle, comprising:
- a bulk container (16) for receiving bulk material;
- a tipping body (18) hydraulically operated by means of a first hydraulic unit (20), which is adapted to tilt the bulk container (16) about at least one axis (A) in order to discharge the bulk material; and
- a control unit (26) for controlling the first hydraulic unit (20);
further comprising at least one sensor unit (S1, S2) which is adapted to supply data to the control unit (26) representing at least one current operating parameter of the load transport vehicle, the control unit (26) being further adapted to control the first hydraulic unit (20) according to at least one predefined sequence program and to modify the at least one predefined sequence program on the basis of the data detected by the at least one sensor unit (S1, S2) during execution of the sequence program, the one sensor unit (S1, S2) or at least one of the plurality of sensor units (S1, S2) being assigned to the first and/or second hydraulic unit (20, 24), **characterised in that** the one sensor unit (S1, S2) or at least one of the plurality of sensor units (S1, S2) is assigned to a hydraulic cylinder of the first or second hydraulic unit (20, 24) and adapted to detect the current stroke length of the hydraulic cylinder, for example by electromechanical means or ultrasound.

2. Load transport vehicle according to claim 1,
**characterised in that** the bulk container (16) has at least one pivoting wall (22) which is adapted to be pivoted about a second axis (B) by a second hydraulic unit (24) assigned to it.

3. Load transport vehicle according to one of the foregoing claims, **characterised in that** at least one of the plurality of sensor units (S1, S2) is adapted to detect an inclination of the load transport vehicle from the horizontal.

4. Load transport vehicle according to one of the foregoing claims, **characterised in that** it further comprises an operating device (30) operatively coupled to the control unit (26) and adapted to be operated by a user in order to select the one predefined sequence program or one of the plurality of predefined sequence programs.

5. Method for operating a load transport vehicle (10), comprising a bulk container (16) for receiving bulk material, a tipping body (18) hydraulically operated by means of a first hydraulic unit (20) which is adapted to tilt the bulk container (16) about at least one axis (A) in order to discharge the bulk material, and a control unit (26) for actuating the first hydraulic unit (20);
comprising the following steps:
- loading at least one predefined sequence program in a memory (28) assigned to the control unit (26);
- detection of at least one current operating parameter of the load transport vehicle (10) by means of at least one sensor unit (S1, S2) which is operatively coupled to the control unit (26);
- operation of the first hydraulic unit (20) according to the predefined sequence program or one of the plurality of predefined sequence programs;
modification of the sequence program on the basis of the data detected by the sensor unit (S1, S2) during execution of the sequence program; **characterised in that** the detection of the at least one current operating parameter of the load transport vehicle (10) comprises detection of at least one of the following:
- a current stroke length of a hydraulic cylinder of the first hydraulic unit (20); and
- a current stroke length of a hydraulic cylinder of a second hydraulic unit (24) assigned to a pivoting wall (22) of the bulk container (16).

6. Method according to claim 5,
**characterised in that** the detection of the at least one current operating parameter of the load transport vehicle comprises detection of an inclination of the load transport vehicle (10) from the horizontal.

7. Method according to claim 5 or 6,
**characterised in that** it further comprises monitoring of a predefined end position of a component operated during the sequence program and, if necessary, modifying the sequence program on the basis of said monitoring.

8. Method according to one of claims 5 to 7,
**characterised in that** it further comprises selection of the predefined sequence program or one of the plurality of predefined sequence programs by a user by means of an operating device (30) operatively coupled to the control unit (26).

## Revendications

1. Véhicule de transport de charges, comprenant :
- un conteneur de matières en vrac (16) destiné à recevoir des matières en vrac ;
- une benne basculante (18) actionnée hydrauliquement au moyen d'un premier dispositif hydraulique (20), qui est adaptée pour faire basculer le conteneur de matières en vrac (16) autour d'au moins un axe (A) pour décharger les matières en vrac ; et
- une unité de commande (26) pour actionner le premier dispositif hydraulique (20) ;
dans lequel il comprend en outre au moins une unité de capteur (S1, S2) qui est adaptée pour fournir des données à l'unité de commande (26) représentant au moins un paramètre de fonctionnement instantané du véhicule de transport de charges, dans lequel l'unité de commande (26) est en outre adaptée pour commander le premier dispositif hydraulique (20) selon au moins un programme séquentiel prédéterminé et pour exécuter ledit au moins un programme séquentiel prédéterminé sur la base des données détectées par ladite au moins une unité de capteur (S1, S2) pendant l'exécution du programme séquentiel,
dans lequel ladite une unité de capteur (S1, S2) ou au moins l'une des plusieurs unités de capteur (S1, S2) est associée au premier et/ou au deuxième dispositif hydraulique (20, 24), **caractérisé en ce que** ladite une unité de capteur (S1, S2) ou au moins l'une des plusieurs unités de capteur (S1, S2) est associée à un cylindre hydraulique du premier ou du deuxième dispositif hydraulique (20, 24) et est adapté pour détecter la course instantanée du cylindre hydraulique, par exemple par des moyens électromécaniques ou des ultrasons.

2. Véhicule de transport de charges selon la revendication 1,
**caractérisé en ce que** le conteneur de matières en vrac (16) présente au moins une paroi pivotante (22) qui est adaptée pour être pivotée autour d'un deuxième axe (B) par un deuxième dispositif hydraulique (24) qui lui est associé.

3. Véhicule de transport de charges selon l'une des revendications précédentes, **caractérisé en ce qu'**au moins une des plusieurs unités de capteur (S1, S2) est adaptée pour détecter une inclinaison du véhicule de transport de charges par rapport à l'horizontale.

4. Véhicule de transport de charges selon l'une des revendications précédentes, **caractérisé en ce qu'**il comprend en outre un dispositif de configuration (30) couplé de manière opérationnelle à ladite unité de commande (26) et adapté pour être actionné par un utilisateur pour sélectionner ledit un programme séquentiel prédéterminé ou un desdits plusieurs programmes séquentiels prédéterminés.

5. Procédé pour faire fonctionner un véhicule de transport de charges (10) comprenant un conteneur de matières en vrac (16) pour recevoir des matières en vrac, une benne basculante (18) actionnée hydrauliquement au moyen d'un premier dispositif hydraulique (20) et adaptée pour faire basculer le conteneur de matières en vrac (16) autour d'au moins un axe (A) pour décharger les matières en vrac, et une unité de commande (26) pour actionner le premier dispositif hydraulique (20) ; comprenant les étapes suivantes :
- la mémorisation d'au moins un programme séquentiel prédéfini dans une mémoire (28) associée à l'unité de commande (26) ;
- la détection d'au moins des paramètres de fonctionnement instantanés du véhicule de transport de charges (10) au moyen d'au moins une unité de capteur (S1, S2) qui est couplée de manière opérationnelle à l'unité de commande (26) ;
- l'opération du premier dispositif hydraulique (20) conformément au programme séquentiel prédéfini ou à l'un des plusieurs programmes séquentiels prédéfinis ;
l'adaptation du programme séquentiel à l'aide des données détectées par l'unité de capteur (S1, S2) pendant l'exécution du programme séquentiel ; **caractérisé en ce que** la détection dudit au moins un paramètre de fonctionnement instantané du véhicule de transport de charge (10) comprend la détection d'au moins un des éléments suivants :
- une course instantanée d'un cylindre hydraulique du premier dispositif hydraulique (20) ; et
- une course instantanée d'un cylindre hydraulique d'un second dispositif hydraulique (24) associé à une paroi pivotante (22) du conteneur de matières en vrac (16).

6. Procédé selon la revendication 5,
**caractérisé en ce que** la détection dudit au moins un paramètre de fonctionnement instantané du véhicule de transport de charges comprend la détection d'une inclinaison du véhicule de transport de charge (10) par rapport à l'horizontale.

7. Procédé selon les revendications 5 ou 6,
**caractérisé en ce qu'**il comprend en outre la surveillance d'une position finale prédéterminée d'un composant actionné pendant le programme séquentiel et, si nécessaire, l'adaptation du programme séquentiel sur la base de cette surveillance.

8. Procédé selon l'une quelconque des revendications 5 à 7,
**caractérisé en ce qu'**il comprend en outre une sélection du programme séquentiel prédéterminé ou de l'un des plusieurs programmes séquentiels prédéterminés par un utilisateur au moyen d'un dispositif de configuration (30) couplé de manière opérationnelle à l'unité de commande (26).
